# EUROPEAN PATENT SPECIFICATION

(11) **EP 4 405 738 B1**
(45) Date of publication and mention of the grant of the patent: **18.12.2024**
(21) Application number: 22789659.4
(22) Date of filing: 30.09.2022
(51) Int. Cl.: G02C 7/04

(54) **OPHTHALMIC LENSES**
OPHTHALMISCHE LINSEN
LENTILLES OPHTALMIQUES

(30) Priority: 27.10.2021 US 202163272357 P
(43) Date of publication of application: 31.07.2024
(60) Divisional application: 24211412.2
(73) Proprietor: CooperVision International Limited, Fareham PO15 5RL (GB)
(72) Inventor: BRADLEY, Arthur, Pleasanton, California 94588 (US); WEBBER, Martin, Eastleigh Hampshire SO53 4LY (GB); HAMMOND, David S., Pleasanton, California 94588 (US); ARUMUGAM, Baskar, Pleasanton, California 94588 (US); CHAMBERLAIN, Paul, Pleasanton, California 94588 (US)
(74) Representative: Abel & Imray LLP
(86) International application number: PCT/GB2022/052493
(87) International publication number: WO 2023/073339

(56) References cited:
- EP-A2- 1 126 310
- WO-A1-2020/261213
- WO-A1-2021/038405
- WO-A1-2021/108843

## Description

### Technical Field

The present invention concerns ophthalmic lenses. More particularly, but not exclusively, this invention concerns ophthalmic lenses for use in preventing or slowing the development or progression of myopia.

### Background

A myopia control lens is an ophthalmic lens which attempts to control the progression of a wearer's myopia. This is typically achieved by subdividing the ophthalmic lens into a plurality of regions. Regions in a first subset of the plurality of regions are provided with a first lens power, corresponding to a first focussing distance (for example to correct distance vision for an unaccommodated eye). Regions in a second subset of the plurality of regions have a second lens power selected to provide a myopic defocus (also referred to as an add power).

In the case of contact lenses for myopia control, the plurality of regions are typically formed as concentric circles centred on the optical axis of the contact lens, with the concentric circles alternating between the first lens power, providing corrected vision, and the second lens power, providing the myopic defocus. Thus, the power map of a typical multifocal contact lens comprises at least two alternating concentric circles of a first and second lens power. However, in lower light conditions the pupil of the wearer's eye dilates in order to provide a larger aperture for incident light, increasing the amount of light received into the eye and thereby providing improved lowlight vision. As conditions brighten, the pupil constricts to provide a smaller aperture and thereby limit the amount of light received into the eye. As the wearer's pupil dilates and constricts, the number of the concentric rings on the contact lens which are positioned across the wearer's entrance pupil will also vary. As the pupil dilates, a greater number of the concentric rings will be positioned across the wearer's entrance pupil. Likewise, as the pupil constricts, fewer of the concentric rings will be positioned across the wearer's entrance pupil. Because the concentric rings alternate between the first lens power (vision correction) and the second lens power (myopic defocus), the amount of second lens power providing the myopic defocus which is positioned across the wearer's entrance pupil will vary as the wearer's pupil constricts and dilates. These variations can impair the lens' ability to provide effective myopia control. In some cases, the pupil may even constrict to the extent that none of the second lens power providing the myopic defocus is positioned across the wearer's entrance pupil, resulting in a failure of the lens to provide effective control of myopia progression.

Furthermore, whilst such lenses have been found to be beneficial in preventing or slowing down the development or progression of myopia, annular myopic defocus regions can give rise to unwanted visual side effects. Light incident on the annular myopic defocus regions is focused in front of the retina, and thus diverges from the focus to form a defocused annulus at the retina. Wearers of these lenses may therefore see a ring or 'halo' surrounding images that are formed on the retina, particularly for small bright objects such as street lights and car headlights. Also, rather than using the natural accommodation of the eye (i.e. the eye's natural ability to change focal length) to bring nearby objects into focus, wearers could make use of the additional focus in front of the retina that results from the annular myopic defocus region to focus on near objects; in other words, wearers could inadvertently use the lenses in the same manner as presbyopia correction lenses are used (i.e. to reduce the need for their eyes to accommodate), which is undesirable (particularly in children).

Several lens designs have been described for reducing the progression of myopia. MISIGHT (CooperVision) is the first of such contact lenses to receive regulatory approval in the United States. MiSight contact lenses are dual focus contact lenses that provide a myopically defocused image at both near and far viewing distances. The dual focus design includes a central distance correction zone circumscribed by alternating rings of different optical powers.

The present invention seeks to mitigate the above-mentioned problems. Alternatively or additionally, the present invention seeks to provide an improved ophthalmic lens for use in preventing or slowing the development or progression of myopia.

The following documents represent prior art for the present invention: WO 2020/261213 A1, WO 2021/038405 A1.

### Summary

The present invention provides, according to a first aspect, an ophthalmic lens for use in preventing or slowing the development or progression of myopia. The lens has a first optical axis. A first surface of the lens is shaped to form a first surface power map. A second surface of the lens is shaped to form a second surface power map. The first and second surface power maps together form a lens power map. One of the first surface power map, the second surface power map, and the lens power map comprises a base region and a myopia control region. The base region focusses light to a focal point that is on the first optical axis. The myopia control region comprises a spiral shape and focusses light to a plurality of focal points that are offset from the first optical axis, wherein the plurality of focal points form a ring or an interrupted ring.

Providing a myopia control region which focusses light to a focal point which is offset from the first optical axis means that the myopia control region does not form an on-axis image at wearer's retina. Such an image could be inadvertently used by the wearer to avoid the need for their eyes to accommodate to focus on near objects. It may therefore be that a myopia control region which focusses light to a focal point which is offset from the first optical axis reduces the risk of a wearer of the lens suffering from a reduction in ability to accommodate due to protracted wearing of a myopia control lens.

Furthermore, a contact lens having a myopia control region in the shape of a spiral can provide a constant ratio of lens powers providing myopic defocus to those providing distance focus across the full range of diameters including the spiral. Thus, a contact lens having a myopia control region in the shape of a spiral can maintain either a substantially constant ratio (where the spiral cover the whole of the lens) or a monotonically varying ratio (where the spiral covers only a radial sub-portion of the lens) of distance focus and myopic defocus as the pupil constricts or dilates. Thus, a contact lens having a myopia control region in the shape of a spiral reduces variations in the ratio of myopic defocus to distance focus in the presence of variable lighting conditions. Contact lenses according to embodiments of the present invention can therefore provide effective myopia control in the presence of varying pupil dilation.

It will be appreciated by the skilled person that, where the power map varies smoothly, the power map may comprise lens powers other than simply a first lens power associated with distance vision focussing and a second lens power associated with myopic defocus. In such a case, the power map may also comprise transition regions having lens powers other than the first and second powers. It will be appreciated that this does not affect or diminish the advantage described above of providing a consistent and stable variation in the ratio of distance focus and myopic defocus positioned across the wearer's entrance pupil. It will be appreciated by the skilled person that, in embodiments, this advantage may be due to a lens having a myopia control region in the shape of a spiral having a composition of lens powers at a given radius which does not vary according to a radial distance from the optical axis of the lens.

According to a second aspect of the invention there is also provided a method of manufacturing an ophthalmic lens. The method comprises operating a lathe to shape a first surface of at least one of: a lens, a mould for a lens, or an insert for manufacturing a mould for a lens. The method further comprises operating a lathe to shape a second surface of the lens, mould, or insert to form a second surface power map. The combination of the first and second surface power maps forms a lens power map having a first optical axis. One of the first surface power map, the second surface power map, and the lens power map comprises a base region and a myopia control region. The base region focusses light to a focal point that is on the first optical axis. The myopia control region comprises a spiral shape and focusses light to a plurality of focal points that are offset from the first optical axis, wherein the plurality of focal points form a ring or an interrupted ring.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
FIG. 1 shows a schematic plan view of a contact lens according to example embodiments of the invention;
FIG. 2 shows a schematic cross-section view of a section of a contact lens according to a first embodiment of the invention;
FIG. 3 shows a schematic cross-section view of a section of a contact lens not according to the invention;
FIG. 4 shows a schematic cross-section view of a section of a contact lens according to an embodiment of the invention; and
FIG. 5 shows a flow chart illustrating the steps of a method of manufacturing a contact lens according to an embodiment of the invention.

### Detailed Description

According to the first aspect of the present invention, there is provided an ophthalmic lens (for example, a contact lens) for use in preventing or slowing the development or progression of myopia. The lens has a first optical axis. A first surface of the lens is shaped to form a first surface power map. A second surface of the lens is shaped to form a second surface power map. The first and second surface power maps together form a lens power map. One of the first surface power map, the second surface power map, and the lens power map comprises a base region and a myopia control region. The base region focusses light to a focal point that is on the first optical axis. The myopia control region comprises a spiral shape and focusses light to a plurality of focal points that are offset from the first optical axis.

Conventional lenses (e.g. spectacle lenses and contact lenses) for correcting myopia reduce the convergence (in the case of contact lenses) or cause divergence (in the case of spectacle lenses) of incoming light from distant objects before it reaches the eye, so that the location of the focus is shifted onto the retina. It may be that the base power is a positive power (i.e. the base power causes light incident on the lens from an infinitely distant point source on the first optical axis to converge to a focal point). The curvature power of the myopia control region may be greater than the base power. It may be that the base power is a negative power (i.e. the base power causes light incident on the lens from an infinitely distant point source on the first optical axis to diverge). In such cases, it may be that the curvature power of the myopia control region is less negative than the base power. It may be that the base region is configured to focus light to a focal point that is on the first optical axis when in use (i.e. when the lens is worn by a user). Hence, it may be that the base region is configured to focus light to a focal point that is on the first optical axis in cooperation with the focussing provided by the optics of the user's eye. Similarly, it may be that the myopia control region focusses light to a plurality of focal points that are offset from the first optical axis when in use (i.e. when the lens is worn by a user). It may be that the myopia control region is configured to focus light to a plurality of focal points that are offset from the first optical axis in cooperation with the focussing provided by the optics of the user's eye.

The ophthalmic lens may comprise a contact lens. The ophthalmic lens may comprise a spectacle lens. The ophthalmic lens may comprise an intra-ocular lens. As used herein, the term contact lens refers to an ophthalmic lens that can be placed onto the anterior surface of the eye. It will be appreciated that such a contact lens will provide clinically acceptable on-eye movement and not bind to the eye or eyes of a person. The contact lens may be in the form of a corneal lens (e.g. a lens that rests on the cornea of the eye). The contact lens may be a soft contact lens, such as a hydrogel contact lens or a silicone hydrogel contact lens. The lens may be for use in preventing or slowing the development or progression of myopia. The lens may be for use in providing an extended depth of focus to a myopic eye.

Contact lenses according to embodiments of the present invention may comprise an optic zone. In such embodiments, the optic zone may encompass the parts of the lens having optical functionality. It may be that the optic zone is configured to be positioned over the pupil of an eye when in use. For contact lenses according to the present disclosure, the optic zone comprises the base region, and the myopia control region. The optic zone may be surrounded by a peripheral zone. In such embodiments, it may be that the peripheral zone is not part of the optic zone, but sits outside the optic zone and above the iris when the lens is worn. The peripheral zone may provide mechanical functions (for example, increasing the size of the lens to make the lens easier to handle, providing ballasting to prevent rotation of the lens, and/or providing a shaped region that improves comfort for the lens wearer). The peripheral zone may extend to the edge of the contact lens.

A contact lens according to an embodiment of the disclosure may include a ballast to orient the lens when positioned on the eye of a wearer. Embodiments of the disclosure incorporating a ballast into the contact lens will, when placed on the eye of a wearer, rotate under the action of the wearer's eyelid to a pre-determined angle of repose; for example the ballast may be a wedge and the rotation may result from the action of the eyelid on the wedge. It is well-known in the art to ballast a contact lens to orient a contact lens; for example, toric contact lenses are ballasted to orient the lens so that the orthogonal cylindrical corrections provided by the lens align correctly for the astigmatism of the wearer's eye. It may be that the contact lens of the present disclosure provides particular benefit to the wearer in a given orientation. For example, the contact lens may provide particular benefit to the wearer when a maximum add power meridian is in a particular orientation.

A contact lens according to an embodiment of the present invention may be substantially circular in shape and have a diameter from about 4 mm to about 20 mm. The optic zone may be substantially circular in shape and may have a diameter from about 2 mm to about 10 mm. In some embodiments, the contact lens has a diameter from 13 mm to 15 mm, and the optic zone has a diameter from 7 mm to 9 mm.

The first optical axis may lie along the centreline of the lens. The central region may focus light from a distant point object, on the first optical axis, to a spot on the first optical axis at a distal focal surface. The term surface, as used herein, does not refer to a physical surface, but to a surface that could be drawn through points where light from distant objects would be focused. Such a surface is also referred to as an image plane (even though it can be a curved surface) or image shell. The eye focuses light onto the retina, which is curved. In a perfectly focused eye, the curvature of the image shell would match the curvature of the retina, therefore the eye does not focus light onto a flat mathematical plane. However, in the art, the curved surface of the retina is commonly referred to as a plane.

It may be that the base region has a curvature centred on a centre of curvature that is on the first optical axis. It may be that the myopia control region has a centre of curvature that is offset from the optical axis.

It may be that the one of the first surface power map, the second surface power map, and the lens power map comprises a curvature power map.

As mentioned above, the myopia control region comprises a spiral shape. It may be that the myopia region forms the shape of a spiral. It may be that the myopia control region comprises more than one (for example, two) spiral shapes. In such cases, it may be that the two spiral shapes twist in opposite directions; that is to say that one of the spirals twists in a clockwise direction and the other twists in an anti-clockwise direction. Where the myopia control region comprises more than one spiral shape, it may be that those spiral shapes are overlaid, such that they combine to form another shape (for example, a shape different to the constituent spirals). Such spirals can be said to be counter-rotating. It will be appreciated that the direction in which the spirals twist should be assessed from the point of view of a wearer of the ophthalmic lens. Thus, it may be that a single surface power map of the ophthalmic lens comprises two counter-rotating spirals.

It may be that the spiral is formed such that a curvature power map along a meridian undergoes a progressive shift radially towards or away from the optical axis as the angle of the meridian increases. Thus, a first meridian can be considered to have a curvature power map defining the curvature power of the surface/lens along the first meridian. A second meridian, angularly adjacent to the first meridian, can be considered to have a curvature power map defining the curvature power of the surface/lens along the second meridian. It may be that the curvature power map along the second meridian is substantially identical to that of the first meridian, but for having undergone a radial translation in a first direction (either towards or away from the optical axis). Similarly, the curvature power map along a third meridian, adjacent to the second meridian, may be substantially identical to that of the second meridian, again but for having undergone a radial translation in the first direction (i.e. in the same direction as the translation between the first and second meridians). Thus, increasing the angle of the observed meridian yields a steady progression in the radial shift of the curvature power map. Thus, it will be understood by the skilled person that a "progressive shift" in this context refers to a continuous translation in a constant direction.

It may be that the one of the first surface power map, the second surface power map, and the lens power map can be considered to comprise a notional plurality of radial bands extending outwards from the optical axis. In such cases, it may be that the curvature power map of each notional radial band in the plurality is substantially identical to the adjacent radial bands in the plurality, apart from having been shifted radially towards or away from the optical axis. Thus, the spiral formed by the myopia control region may have a pixelated appearance, in which the spiral is approximated by distinct segments. In other embodiments, the progressive radial shift of the power map along the meridians comprises a smooth continuous shift. In such cases, it may be that a smooth spiral is formed.

It may be that the spiral is formed such that an increase in radial distance from the optical axis gives a progressive rotation about the optical axis of a circle at that radial distance of the one of the first surface power map, the second surface power map, and the lens power map. Thus, it may be that a first circle of the lens can be considered to have a curvature power map defining the curvature power along the first circle. A second circle of the lens, radially adjacent to the first circle, can be considered to have a curvature power map defining the curvature power along the second circle. It may be that the curvature power map along the second circle is substantially identical to that of the first circle, but for having undergone an angular rotation about the optical axis in a first direction (i.e. either clockwise or anti-clockwise). Similarly, the curvature power map along a third circle, radially adjacent to the second circle, may be substantially identical to that of the second circle, again but for having undergone an angular rotation about the optical axis in the first direction (i.e. in the same direction as the rotation between the first and second meridians). Thus, increasing the radial distance from the optical axis of the observed circle yields a steady progression in the angular shift of the curvature power map.

It may be that the one of the first surface power map, the second surface power map, and the lens power map can be considered to comprise a notional plurality of annular rings. In such cases, it may be that the power map of each notional annular ring in the plurality is substantially identical to the adjacent annular rings in the plurality, apart from having been rotated about the optical axis. Alternatively, the progressive rotation of the circle of the one of the first surface power map, the second surface power map, and the lens power map comprises a smooth continuous rotation.

It may be that the spiral comprises more than 2 arms, preferably more than 4 arms, more preferably more than 8 arms, and yet more preferably more than 16 arms. It may be that each of the arms of the spiral twists through at least half a rotation, preferably at least a whole rotation, more preferably at least one and a half rotations, and yet more preferably at least two rotations.

It may be that each arm of the spiral extends from the optical axis of the portion to the periphery of the power map. Contact lenses according to embodiments of the invention in which the arms of the spirals extend from the optical axis of the lens to the periphery of the power maps can provide a substantially constant ratio of the base power (corresponding to distance focus) to the myopic defocus in the presence of varying pupil dilation. Such embodiments may provide a more consistent myopic defocussed image in varying light conditions compared to concentric ring lens designs and can also provide a more consistent myopic defocussed image upon lens decentration compared to concentric ring contact lens designs.

The myopia control region may abut the base region. A blending region may be provided between the base region and the myopia control region. It may be that the blending region does not substantially affect the optics provided by the base region or the myopia control region. Thus, it may be that the one of the first surface power map, the second surface power map, and the lens power map further comprises a blending region. In such cases, the blending region may separate the base region from the myopia control region. The blending region may vary to provide a smooth transition between the base region and the myopia control region.

As mentioned above, the base region focusses light to a focal point that is on the first optical axis, while the myopia control region focusses light to a plurality of focal points that are offset from the first optical axis. Thus, light rays from a distant point source passing through the base region converge towards a point on the first optical axis. Light rays from a distant point source passing through the myopia control region converge towards one or more points which are a distance from the first optical axis.

It may be that, in addition to focussing light to a plurality of focal points that are offset from the first optical axis, the myopia control region may also focus light to one or more points which are on the first optical axis (for example, light passing through particular portions of the myopia control region). Thus, it may be that only a subset of focal points formed by the myopia control region are offset from the first optical axis. It may be that the spiral formed by the myopia control region comprises a plurality of arms. In such cases, it may be that one or more of the arms in the plurality focus light to one or more focal points which are on the first optical axis and one or more of the other arms in the plurality focus light to one or more focal points which are offset from the first optical axis.

The plurality of focal points formed by the myopia control region may comprise at least one focal point for each meridian of the lens/surface power map. Thus, it may be that each meridian of the lens/surface power map forms one of the plurality of focal points. Where a given meridian of the lens/surface power map comprises more than one arm of the spiral, it may be that the myopia control region at that meridian forms two focal points. Thus, it may be that each arm of the spiral in each meridian of the lens/surface power map forms one of the plurality of focal points. Hence, it may be that each arm of each meridian of the lens/surface power map comprises its own local focal point, which comprises one of the plurality of focal points of the myopia control region.

It may be that the offset from the optical axis of the focal points of the myopia control region is substantially constant across the lens. For example, where the centre of curvature of the myopia control region is substantially constant across the lens, the focal points of the myopia control region may form a ring around and centred on the optical axis.

It may be that the offset from the optical axis of the focal points of the myopia control region varies across the lens. In such cases, the offset from the optical axis of the focal points of the myopia control region may vary according to radial distance from the optical axis. It may be that the spiral formed by the myopia control region comprises one or more arms. In such cases, the offset of the focal points of the myopia control region may vary such that light incident on a radial edge (for example, a radially outermost or innermost edge or a centreline) of each of the one or more arms is directed towards the focal point of the base region. It may be that the offset of the focal points of the myopia control region may vary such that light incident on a centreline of each of the one or more arms is directed towards the focal point of the base region. It will be appreciated that, in other embodiments, the offset of the focal points may vary such other parts of the spiral direct incident light towards the focal point of the base region. It will be appreciated by the skilled person that, in this context, the incident light is from an infinitely distant point source positioned on the first optical axis.

It may be that the base power varies across the surface/lens power map. The base power may vary (for example, linearly, exponentially, or monotonically) according to a radial distance from the optical axis. For example, it may be that the base power decays (for example, linearly) radially outwards from the centre of the portion.

It may be that the spiral varies across the surface/lens power map. It may be that a peak power of one or more arms of the spiral varies according to one or both of: a radial distance from the optical axis and an azimuthal position about the optical axis. It may be that the peak power of at least one arm of the spiral differs from that of the other arms. Thus, it may be said that each arm of the spiral has a different power. It may be that the peak power of each arm of the spiral differs from that of the other arms. It may be that a twist rate of the spiral varies according to a radial distance from the centre of the portion. The twist rate of the spiral will be understood to mean the rate at which the arms of the spiral rotate about the centre of the spiral (i.e. the number of rotations of the arms about the centre of the spiral across a given radial distance). It may be that a width of one or more arms of the spiral differs from a corresponding width of the other arms of the spiral.

It may be that the base region immediately surrounds the optical axis such that the lens comprises a central portion into which the myopia control region does not extend and an outer portion which surrounds the central portion and comprises the myopia control region. It may be that a power of the surface/lens power map is substantially constant. It may be that the outer portion comprises the spiral. Providing the surface/lens power map with a central portion of base power can increase the quantity of base power provided by the surface/lens power map, and thereby increase the prominence of the resulting focussed image.

The diameter of the central portion may be less than 50%, preferably less than 40%, more preferably less than 30%, of that of the power map. It may be that the central portion is smaller than the minimum pupil size of the wearer. Embodiments of the invention having a central portion which is smaller than the minimum pupil size of the wearer can maintain myopia control in the presence of varying light conditions.

It may be that the surface/lens power map further comprises a transition portion. The transition portion may surround the central portion. The outer portion may surround the transition portion. It may be that a power of the surface/lens power map within the transition portion varies to provide a smooth transition between the central portion and the outer portion. It may be that the transition portion also comprises a spiral (for example, a spiral continuing from that of the myopia control region). In such embodiments, a magnitude of the spiral in the transition portion may decay (for example, linearly) between an outermost radius of the transition portion and an innermost radius of the transition portion. It may be that the transition spiral decays from a magnitude equal to that of the spiral in the outer portion (for example, at the outermost radius) to zero (for example, at the innermost radius).

It may be that the myopia control region is provided by the first surface power map. In such embodiments, the second surface power map may comprise a further myopia control region. The further myopia control region may also comprise (for example, form the shape of) a spiral and focus light to a plurality of focal points that are offset from the first optical axis. It may be that the spiral of the further myopia control region twists in the opposite direction to that of by the myopia control region. It will be appreciated by the skilled person that the twist direction of the spirals should be determined from the perspective of a wearer of the lens. It may be that each of the first and second surface power maps each comprise a single spiral. Thus, it may be that each of the first and second surface power maps does not comprise more than one spiral. Hence, it may be the each of the first and second surface power maps comprises a myopia control region forming the shape of a spiral. In such cases, the spirals formed on each of the first and second surface power maps may be the same but for the opposing twist directions.

It will be appreciated by the skilled person that the overall power map of the lens is determined by the superposition of the first surface power map and the second surface power map. In embodiments, the spirals provided by the first and second surface power maps may twist in opposing directions. Thus, the first and second surface power maps can be said to comprise counter-rotating spirals. It may be that the spiral formed on the first surface power map twists in an anticlockwise direction and the spiral formed on the second surface power map twists in a clockwise direction. Alternatively, it may be that the spiral formed on the first surface power map twists in a clockwise direction and the spiral formed on the second surface power map twists in an anti-clockwise direction.

The superposition of the two counter-rotating spirals formed by the first surface power map and the second surface power map results in a lens power map which approximates a pseudo-dartboard pattern of alternating annular rings or multiple segments of defocus. Thus, in such cases, the overall lens power map varies between a first lens power (provided by the base region), which provides distance vision, and a second lens power (provided by the myopia control regions), which provides a myopic defocus. In such cases, the lens power map may comprise a plurality of sections. The plurality of sections may provide either a first power corresponding to a distance focus or a second power corresponding to myopic defocus. The sections may be arranged on the lens power map such that they alternate radially and/or angularly between the distance focus and myopic defocus.

As previously discussed, a contact lens having a myopia control region in the shape of a spiral can maintain either a substantially constant ratio (where the spiral cover the whole of the lens) or a monotonically varying ratio (where the spiral covers only a radial sub-portion of the lens) of distance focus and myopic defocus as the pupil constricts or dilates. The pseudo-dartboard pattern provided by the superposition of two counter-rotating spirals also provides this same benefit. Thus, a contact lens having a power map which approximates a pseudo-dartboard pattern can be effective in providing myopia control. A contact lens having a pseudo-dartboard power map reduces variations in the ratio of myopic defocussing to distance focussing in the presence of variable lighting conditions. Such a lens power map provides a more stable ratio of lens powers (i.e. the ratio of the lens powers providing myopic defocus to those providing distance vision focussing) in the presence of changes in the pupil size of the wearer.

As the ophthalmic lens is intended as a myopia control lens, a wearer of the ophthalmic lens will generally be between the ages of approximately 5 years and 18 years and, therefore, the wearer's eyes are very likely able to accommodate. It will therefore be appreciated that, although the base lens power is selected for distance vision, the wearer may also view near distances through base region due to the wearer's ability to accommodate.

A contact lens according to embodiments of the present invention may comprise an elastomer material, a silicone elastomer material, a hydrogel material, or a silicone hydrogel material, or combinations thereof. As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). In some embodiments, the hydrogel material or silicone hydrogel material has an EWC from about 30% to about 70% (wt/wt). In comparison, a silicone elastomer material, as described in the context of the present disclosure, has a water content from about 0% to less than 10% (wt/wt). Typically, the silicone elastomer materials used with the present methods or apparatus have a water content from 0.1% to 3% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, and the like.

Alternatively, the lens may comprise, consist essentially of, or consist of a silicone elastomer material. For example, the lens may comprise, consist essentially of, or consist of a silicone elastomer material having a Shore A hardness from 3 to 50. The shore A hardness can be determined using conventional methods, as understood by persons of ordinary skill in the art (for example, using a method DIN 53505). Other silicone elastomer materials can be obtained from NuSil Technology or Dow Chemical Company, for example.

According to a second aspect of the invention there is also provided a method of manufacturing an ophthalmic lens. The method comprises operating a lathe to shape a first surface of at least one of: a lens, a mould for a lens, or an insert for manufacturing a mould for a lens. The method further comprises operating a lathe to shape a second surface of the lens, mould, or insert to form a second surface power map. The combination of the first and second surface power maps forms a lens power map having a first optical axis. One of the first surface power map, the second surface power map, and the lens power map comprises a base region and a myopia control region. The base region has focusses light to a focal point that is on the first optical axis. The myopia control region comprises a spiral shape and focusses light to a plurality of focal points that are offset from the first optical axis, wherein the plurality of focal points form a ring or an interrupted ring.

The lens may include any of the features set out above.

The method of manufacturing may comprise forming a female mould member with a concave lens forming surface and a male mould member with a convex lens forming surface. The method may comprise filling a gap between the female and male mould members with bulk lens material. The method may further comprise curing the bulk lens material to forms the lens.

The lens may be a formed using a lathing process. The lens can be formed by cast moulding processes, spin cast moulding processes, or lathing processes, or a combination thereof. As understood by persons skilled in the art, cast moulding refers to the moulding of a lens by placing a lens forming material between a female mould member having a concave lens member forming surface, and a male mould member having a convex lens member forming surface.

The method of manufacturing a lens may include designing a lens, wherein the designed lens is a lens according to an embodiment of the present disclosure, and includes any of the features described above. The lens may be designed using modelling, which may be computerimplemented modelling.

The method may comprise modelling a first lens (for example, a contact lens). The first lens may have a base region, the base region having a base power which focusses light to a focal point that is on the first optical axis. The first lens may comprise a myopia control region which forms the shape of a spiral and focusses light to a focal point that is on the first optical axis. The myopia control region may provide an add power (for example, a curvature add power) which is greater than the base power. The method may comprise modelling a second lens (for example, a contact lens). The second lens may have the same base region as the first lens. The base region of the second lens may have the same base power as the first lens, and may focus light to a focal point that is on the first optical axis. The second lens may have a myopia control region that forms the shape of a spiral. The myopia control region may provide an add-power (for example, a curvature add power) which is greater than the base power. The net power of the second lens will be the sum of the base power and the add-power of the second lens. The net power of the second lens may be greater than the net power of the first lens. The method of designing the lens may comprise, within the model, tilting the myopia control region of the second lens whilst keeping the inner edge of the myopia control region fixed. The method may comprise translating at least a part of the base region, such that an outer edge of the myopia control region matches the corresponding edge of the base region of the first lens. The method may comprise, within the model, tilting each arm of the spiral formed by the myopia control region whilst keeping the inner edge of the arm of the spiral fixed. The method may comprise translating at least a part of the base region, such that an outer edge of the arm of the spiral matches the corresponding edge of the base region of the first lens. The method may comprise providing a blending region between the base region and the myopia control region. The blending region may provide a smooth transition between the base region and the myopia control region. The method may comprise performing the tilting (and, where applicable, the translating) separately for each meridian of the lens. Tilting the myopia control region of the second lens may split the focal point into a plurality of focal points and move those focal points away from the first optical axis. Tilting the annular region of the second lens will give rise to a third modelled lens (for example, a third contact lens), i.e. the tilted second lens. The third lens, or tilted second lens, will have a myopia control region that gives rise to the same net power as the un-tilted second lens, but with a plurality of off-axis focal points.

The method may of manufacturing a lens may comprise manufacturing a lens based on the modelled third lens (i.e. the tilted second lens). As a lens based on the third modelled lens will have a higher curvature than a lens based on the first modelled lens, this lens may have a higher positive spherical aberration. A lens manufactured based on the third contact lens design may also have an extended depth of focus compared to a lens based on either the first or second modelled lenses.

It may be that the method further comprises a step of designing the lens. The designing may comprise defining for a first meridian of the one of the first surface, the second surface, and the lens, a curvature power distribution along the meridian. The designing may further comprise defining for a second meridian, adjacent to the first meridian, of the one of the first surface, the second surface, and the lens, a second curvature power distribution along the meridian. It may be that the second curvature power distribution is substantially identical to the adjacent radial bands in the plurality, apart from having been shifted radially towards or away from the optical axis.

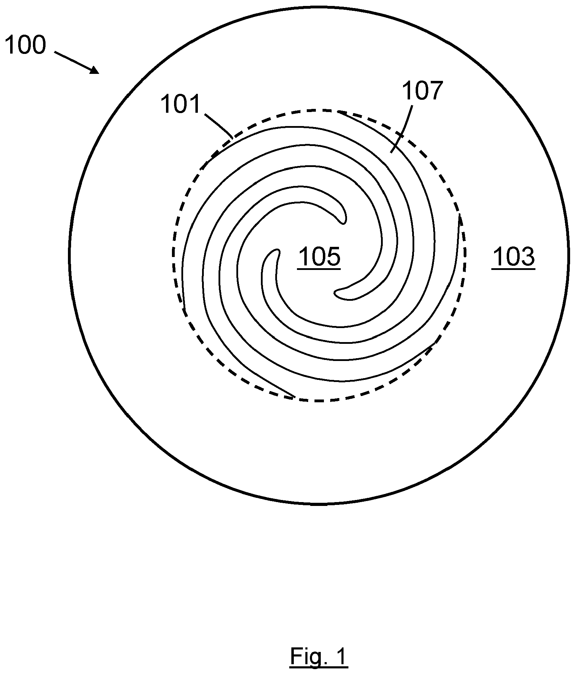

FIG. 1 shows a schematic plan view of a contact lens 100 according to example embodiments of the present invention. The contact lens 100 comprises an optic zone 101, which approximately covers the pupil, and a peripheral zone 103 that sits over the iris. The peripheral zone 103 provides mechanical functions, including increasing the size of the lens thereby making the lens 100 easier to handle, providing ballasting to prevent rotation of the lens 100, and providing a shaped region that improves comfort for the lens 100 wearer. The optic zone 101 provides the optical functionality of the lens 100. The optic zone 101 comprises a base region 105 and a myopia control region 107. The myopia control region 107 forms the shape of a spiral.

In the particular embodiments illustrated in FIG. 1, the spiral formed by the myopia control region 107 comprises three arms. However, it will be appreciated that, in other embodiments, the spiral may have more or fewer arms. Similarly, although in the example embodiments illustrated in FIG. 1 the spiral twists in an anti-clockwise direction, in other embodiments the spiral may twist in a clockwise direction.

In the illustrated embodiments of FIG. 1, the lens 100 comprises a central portion into which the myopia control region 107 does not extend. The lens further comprises an outer portion which comprises the myopia control region 107. The central portion has a substantially constant lens power equal to the base power (as it is within the base region). In other embodiments, the lens does not comprise a central portion or outer portion; instead, the spiral formed by the myopia control region extends from the periphery of the optic zone 101 to the optical axis of the lens 100.

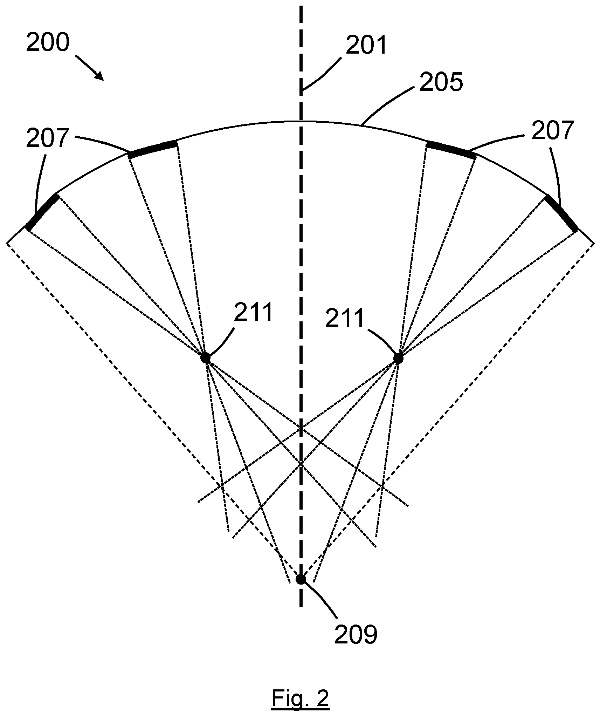

FIG. 2 shows a schematic cross-section view of a section through a contact lens 200 according to a first embodiment of the invention. The contact lens 200 has an optical axis 201. The contact lens 200 has a first surface power map comprising a base region 205 which focusses light to a focal point 209 which is on the optical axis 201. The first surface power map further comprises a myopia control region 207 which forms the shape of a spiral. In this example, the second surface power map of the contact lens 200 provides no additional focussing. Hence, the lens power map of the contact lens 200 is identical to the first surface power map. It will be appreciated that, as FIG. 2 shows a section view of contact lens 200, only a section through the arms of the spiral is visible. The myopia control region 207 focusses light to a plurality of focal points 211 which are offset from the optical axis 201 The offset of the focal points 211 from the optical axis 201 is substantially constant across the lens 200. Thus, the focal points 211 form a ring around and centred on the optical axis 201. It will be appreciated that, in embodiments in which the myopia control region 207 forms a spiral which does not intersect one or more meridians of the lens, then the focal points 211 will form an interrupted ring, with the positions of the interruptions in the ring corresponding to those meridians not intersected by the spiral.

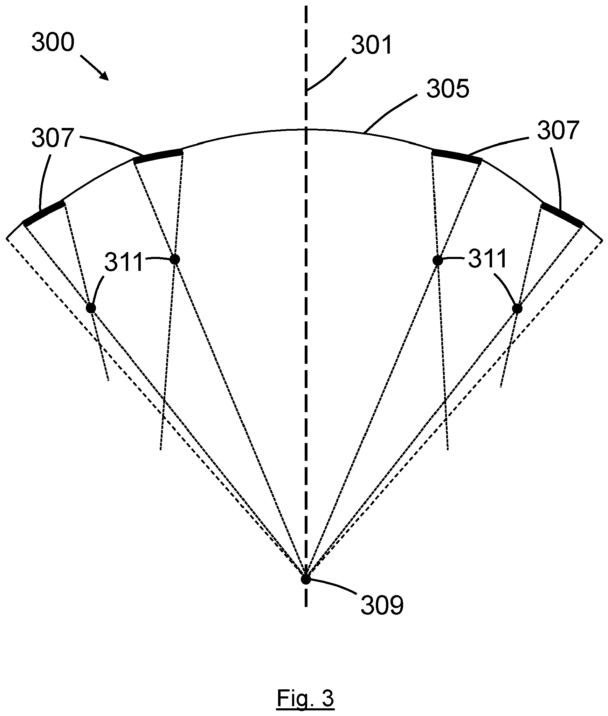

FIG. 3 shows a schematic cross-section view of a section through a contact lens 300. The contact lens 300 has an optical axis 301. The contact lens 300 has a first surface power map comprising a base region 305 which focusses light to a focal point 309 which is on the optical axis 301. The first surface power map further comprises a myopia control region 307 which forms the shape of a spiral. Once again, in this example, the second surface power map of the contact lens 300 provides no additional focussing, so the lens power map of the contact lens 300 is identical to the first surface power map. It will be appreciated that, as FIG. 3 shows a section view of contact lens 300, only a section through the arms of the spiral is visible. The myopia control region 307 focusses light to a plurality of focal points 311 which are offset from the optical axis 301. In this particular embodiment, the curvature of the myopia control region 307 is such that the offset from the optical axis 301 of the focal points 311 of the myopia control region 307 varies according to radial distance from the optical axis 301. In this example, the offset of the focal points 311 from the optical axis 301 varies such that light incident on a radially outermost edge of each of the one or more arms is directed towards the focal point 309 of the base region 305. Thus, the focal points 211 form a spiral around the optical axis 301. It will be appreciated by the skilled person that, in this context, the incident light is from an infinitely distant point source positioned on the first optical axis.

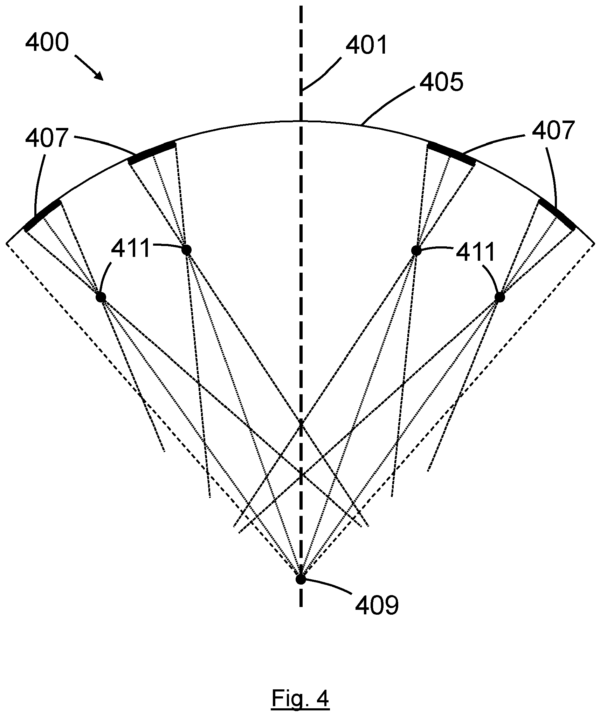

FIG. 4 shows schematic cross-section view of a section through a contact lens 400 according to a third embodiment of the invention. The contact lens 400 is identical to the contact lens 300 of the third embodiment (with myopia control region 407) except that the offset of the focal points 411 from the optical axis 401 varies such that light incident on a centreline of each of the one or more arms is directed towards the focal point 409 of the base region 405. It will be appreciated by the skilled person that the centreline of an arm of the spiral runs along the perpendicular mid-point of the arm.

A fourth example embodiment of the invention comprises a contact lens as described in respect of the first embodiment except for the following features. Unlike the first embodiment, the second surface power map of the contact lens of the third embodiment comprises a further myopia control region which forms the shape of a spiral and focusses light to a further plurality of focal points that are offset from the first optical axis. The spiral formed by the further myopia control region is substantially identical to that formed by the myopia control region on the first surface power map, except that it twists in the opposite direction. Thus, the contact lens of the third embodiment can be said to have two myopia control regions which form counter-rotating spirals. The lens power map of the contact lens of the third embodiment therefore forms a pseudo-dartboard pattern of alternating annular rings of multiple segments of distance focus and myopic defocus. The overall lens power map varies between a first lens power (provided by the base region), which provides distance vision, and a second lens power (provided by the myopia control regions), which provides a myopic defocus.

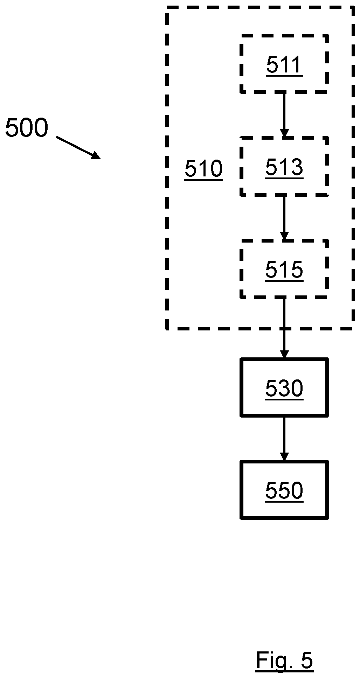

FIG. 5 shows a method 500 of manufacturing a lens (for example, a contact lens) according to a fifth embodiment of the invention.

An optional first step of the method, represented by item 510, comprises designing the lens. It may be that the lens comprises a first surface power map and a second surface power map. In such cases, it may be that the combination of the first surface power map and the second surface power map comprises a lens power map. Designing the lens may comprise a first sub-step, represented by item 511, of defining for a first meridian of the one of the first surface power map, the second surface power map, and the lens power map, a curvature power distribution along the meridian. Designing the lens may comprise a second sub-step, represented by item 513, of defining for a second meridian, adjacent to the first meridian, of the one of the first surface, the second surface, and the lens, a second curvature power distribution along the meridian. It may be that the second curvature power distribution is substantially identical to the adjacent radial bands in the plurality, apart from having been shifted radially towards or away from the optical axis. Designing the lens may comprise a third sub-step, represented by item 515, of defining further curvature power distributions for further meridians, such that the first, second, and further curvature power maps are substantially identical apart from having been radially shifted towards or away from the optical axis. It may be that the radial shifts of the curvature power maps are such that the curvature power maps are progressively shifted in the same direction as the angle of an observed meridian increases.

A second step of method 500, represented by item 530, comprises operating a lathe to shape a first surface of at least one of: a lens, a mould for a lens, or an insert for manufacturing a mould for a lens.

A third step of method 500, represented by item 550, comprises operating a lathe to shape a second surface of the lens, mould, or insert to form a second surface power map.

The shaping of the first surface and the second surface is such that one of the first surface power map, the second surface power map, and the lens power map comprises a base region and a myopia control region. The base region has a base power which focusses light to a focal point that is on the first optical axis. The myopia control region forms the shape of a spiral and focusses light to a plurality of focal points that are offset from the first optical axis.

It will be appreciated by the skilled person that method may comprise forming the first and second surfaces such that the lens comprises any of the features described above in respect of the contact lenses of the present invention.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the described embodiments, the surface power maps of the lenses comprise a central portion having substantially constant power, an outer portion incorporating the myopia control region, and a transition region providing a smooth transition between the central and outer portions. However, some alternative embodiments do not incorporate a transition portion. Further alternative embodiments do not incorporate distinct central and outer portions. Instead, in such embodiments, the spiral formed by the myopia control region extends from the centre of the power map all of the way out to the radial periphery of the power map.

In some embodiments of the invention, the spiral formed by the myopia control region changes its direction of rotation at a pre-determined radial distance from the optical axis of the lens. For example, the spiral may rotate in a clockwise direction between the optical axis of the lens and the pre-determined radial distance, and in an anti-clockwise direction beyond the pre-determined radial distance. The lens may incorporate more than one change in the direction of rotation of the spiral. Thus, the spiral may, for example, change from a clockwise rotation to an anti-clockwise rotation before reverting to a clockwise rotation again. It will be appreciated by the skilled person that the lens can incorporate any number of changes in the direction of rotation of the spiral. It will also be appreciated that each of those changes in direction can take place at any chosen radial distance from the optical axis of the lens. A surface or lens power map according to embodiments of the invention may therefore comprise annular rings alternating between clockwise and anti-clockwise rotating spirals. In such embodiments, it may be that each counter-rotating spiral changes its direction of rotation at the same radial distance from the optical axis of the lens.

In some embodiments, between parts of the power map having different directions of rotation, there may be a region in which the power map does not vary as a spiral. For example, the region may have a substantially constant power. For example, from the centre of the lens to a first radial distance, the myopia control region may form a clockwise rotating spiral, followed by a region of substantially constant power, before forming an anti-clockwise rotating spiral. The power map may therefore appear to comprise a plurality of annular rings, for example alternating between a spiral and substantially constant power, wherein the rings comprising a spiral also alternate between clockwise and anti-clockwise rotation.

Similarly, in some embodiments, the spiral formed by the myopia control region may be interrupted by one or more regions, for example rings, in which the power map does not vary as a spiral. Such regions may have a substantially constant power (for example, the base power). Thus, for example, the power map may comprise annular rings alternating between the spiral formed by the myopia control region and the base power. In such embodiments, the spiral may change its direction of rotation between each interruption, or it may continue with its previous direction of rotation. Thus, the spiral may maintain a constant direction of rotation across the lens, but may be interrupted by regions of substantially constant lens power.

Whilst the lenses described above have base regions with a substantially constant base power and myopia control regions forming the shape of regular spirals, it will be appreciated by the skilled person that other embodiments of the invention need not necessarily. For example, in other embodiments, the base power varies across the surface/lens power map. The base power may vary (for example, linearly, exponentially, or monotonically) according to a radial distance from the optical axis. For example, it may be that the base power decays (for example, linearly) radially outwards from the centre of the portion.

It may be that the spiral formed by the myopia control region varies across the surface/lens power map. It may be that a peak power of one or more arms of the spiral formed by the myopia control region varies according to one or both of: a radial distance from the optical axis and an azimuthal position about the optical axis. It may be that the peak power of at least one arm of the spiral differs from that of the other arms. Thus, it may be said that each arm of the spiral has a different power. It may be that the peak power of each arm of the spiral differs from that of the other arms. It may be that a twist rate of the spiral varies according to a radial distance from the centre of the portion. The twist rate of the spiral will be understood to mean the rate at which the arms of the spiral rotate about the centre of the spiral (i.e. the number of rotations of the arms about the centre of the spiral across a given radial distance). It may be that a width of one or more arms of the spiral differs from a corresponding width of the other arms of the spiral.

Whilst embodiments of the invention have been described above in relation to a method of manufacturing lenses, moulds for lenses, or inserts for moulds for lenses using a lathe, it will be appreciated that other methods of manufacture are also possible. For example, the moulds or the inserts may also be manufactured using additive manufacturing techniques, for example by 3D printing.

Reference Reference should be made to the claims for determining the true scope of the present invention.

## Claims

1. An ophthalmic lens (200) for use in preventing or slowing the development or progression of myopia, wherein:
the lens (200) has a first optical axis (201);
a first surface of the lens (200) is shaped to form a first surface power map;
a second surface of the lens (200) is shaped to form a second surface power map;
the first and second surface power maps together form a lens power map; and
one of the first surface power map, the second surface power map, and the lens power map comprises:
a base region (205) having a base power which focusses light to a focal point (209) that is on the first optical axis (201); and
a myopia control region (207) which comprises a spiral shape and focusses light to a plurality of focal points (211) that are offset from the first optical axis (201), wherein the plurality of focal points (211) form a ring or an interrupted ring.

2. An ophthalmic lens (200) according to claim 1, wherein:
the one of the first surface power map, the second surface power map, and the lens power map comprises a curvature power map; and
the spiral is formed such that a power map along a meridian undergoes a progressive shift radially towards or away from the optical axis (201) as the angle of the meridian increases.

3. An ophthalmic lens (200) according to claim 2, wherein:
the one of the first surface power map, the second surface power map, and the lens power map comprises a notional plurality of radial bands extending outwards from the optical axis (201); and
the curvature power map of each notional radial band in the plurality is substantially identical to the adjacent radial bands in the plurality, apart from having been shifted radially towards or away from the optical axis (201).

4. An ophthalmic lens (200) according to claim 2, wherein the radial shift of the power map along a meridian of the one of the first surface power map, the second surface power map, and the lens power map comprises a smooth continuous shift.

5. An ophthalmic lens (200) according to claim 1, wherein the offset from the optical axis (201) of the focal points (211) of the myopia control region (207) is substantially constant across the lens (200).

6. An ophthalmic lens (200) according to claim 1, wherein the one of the first surface power map, the second surface power map, and the lens power map further comprises a blending region;
the blending region separates the base region (205) from the myopia control region (207); and
the blending region varies to provide a smooth transition between the base region (205) and the myopia control region (207).

7. An ophthalmic lens (200) according to claim 1, wherein the base region (205) immediately surrounds the optical axis (201) such that the lens (200) comprises:
a central portion into which the myopia control region (207) does not extend; and
an outer portion which surrounds the central portion and comprises the myopia control region (207).

8. An ophthalmic lens (200) according to claim 7, wherein:
the lens (200) comprises a transition portion;
the transition portion surrounds the central portion and the outer portion surrounds the transition portion; and
the transition portion varies to provide a smooth transition between the central portion and the outer portion.

9. An ophthalmic lens (200) according to claim 1, wherein:
the myopia control region (207) is provided by the first surface power map;
the second surface power map comprises a further myopia control region (207) which comprises a spiral shape and focusses light to a further plurality of focal points (211) that are offset from the first optical axis (201);
the spiral formed by the further myopia control region (207) twists in the opposite direction to that formed by the myopia control region (207).

10. An ophthalmic lens (200) according to claim 1, wherein the myopia control region (207) provides a curvature add power which is greater than the base power.

11. A method (500) of manufacturing an ophthalmic lens, the method comprising:
operating a lathe (530) to shape a first surface of at least one of: a lens, a mould for a lens, or an insert for manufacturing a mould for a lens;
operating a lathe (550) to shape a second surface of the lens, mould, or insert to form a second surface power map;
wherein:
the combination of the first and second surface power maps forms a lens power map having a first optical axis (201); and
one of the first surface power map, the second surface power map, and the lens power map comprises:
a base region (205) having a base power which focusses light to a focal point (209) that is on the first optical axis (201); and
a myopia control region (207) which comprises a spiral shape and focusses light to a plurality of focal points (211) that are offset from the first optical axis (201), wherein the plurality of focal points (211) form a ring or an interrupted ring.

12. A method according to claim 11, further comprising:
designing the ophthalmic lens (510) by:
defining (511) for a first meridian of the one of the first surface, the second surface, and the lens, a curvature power distribution along the meridian;
defining (513) for a second meridian, adjacent to the first meridian, of the one of the first surface, the second surface, and the lens, a second curvature power distribution along the meridian;
wherein the second curvature power distribution is substantially identical to the adjacent radial bands in the plurality, apart from having been shifted radially towards or away from the optical axis (201).

## Patentansprüche

1. Ophthalmische Linse (200) zur Verwendung zur Verhinderung oder Verlangsamung der Entwicklung oder des Fortschreitens von Myopie, wobei:
die Linse (200) eine erste optische Achse (201) hat;
eine erste Oberfläche der Linse (200) so geformt ist, dass sie eine erste Oberflächen-Brechwertverteilung bildet;
eine zweite Oberfläche der Linse (200) so geformt ist, dass sie eine zweite Oberflächen-Brechwertverteilung bildet;
die erste und die zweite Oberflächen-Brechwertverteilung zusammen eine Linsen- Brechwertverteilung bilden; und
eine der ersten Oberflächen-Brechwertverteilung, der zweiten Oberflächen-Brechwertverteilung und der Linsen- Brechwertverteilung Folgendes umfasst:
einen Basisbereich (205) mit einer Basisstärke, die das Licht auf einen Brennpunkt (209) fokussiert, der auf der ersten optischen Achse (201) liegt; und
einen Myopiekontrollbereich (207), der eine Spiralform aufweist und Licht auf eine Vielzahl von Brennpunkten (211) fokussiert, die von der ersten optischen Achse (201) versetzt sind,
wobei die Vielzahl von Brennpunkten (211) einen Ring oder einen unterbrochenen Ring bildet.

2. Ophthalmische Linse (200) nach Anspruch 1, wobei:
die eine der ersten Oberflächen-Brechwertverteilung, der zweiten Oberflächen-Brechwertverteilung und der Linsen- Brechwertverteilung eine Krümmungs-Brechwertverteilung umfassen; und
die Spirale so geformt ist, dass eine Brechwertverteilung entlang eines Meridians mit zunehmendem Winkel des Meridians eine fortschreitende radiale Verschiebung zur optischen Achse (201) hin oder von ihr weg erfährt.

3. Ophthalmische Linse (200) nach Anspruch 2, wobei:
die eine der ersten Oberflächen-Brechwertverteilung, der zweiten Oberflächen-Brechwertverteilung und der Linsen-Brechwertverteilung eine angenommene Vielzahl von radialen Bändern umfassen, die sich von der optischen Achse (201) nach außen erstrecken; und
die Krümmungs-Brechwertverteilung jedes angenommenen radialen Bandes aus der Vielzahl im Wesentlichen identisch mit den benachbarten radialen Bändern aus der Vielzahl ist, außer, dass sie radial zur optischen Achse (201) hin oder von ihr weg verschoben wurde.

4. Ophthalmische Linse (200) nach Anspruch 2, wobei die radiale Verschiebung der Brechwertverteilung entlang eines Meridians der einen der ersten Oberflächen-Brechwertverteilung, der zweiten Oberflächen-Brechwertverteilung und der Linsen-Brechwertverteilung eine gleichmäßige kontinuierliche Verschiebung umfassen.

5. Ophthalmische Linse (200) nach Anspruch 1, wobei der Versatz der Brennpunkte (211) des Myopiekontrollbereichs (207) von der optischen Achse (201) über die Linse (200) hinweg im Wesentlichen konstant ist.

6. Ophthalmische Linse (200) nach Anspruch 1, wobei die eine der ersten Oberflächen-Brechwertverteilung, der zweiten Oberflächen-Brechwertverteilung und der Linsen-Brechwertverteilung außerdem einen Übergangsbereich umfassen;
der Übergangsbereich den Basisbereich (205) vom Myopiekontrollbereich (207) trennt; und
der Übergangsbereich variiert, um einen gleichmäßigen Übergang zwischen dem Basisbereich (205) und dem Myopiekontrollbereich (207) bereitzustellen.

7. Ophthalmische Linse (200) nach Anspruch 1, wobei der Basisbereich (205) die optische Achse (201) unmittelbar umgibt, so dass die Linse (200) Folgendes umfasst:
einen zentralen Bereich, in den sich der Myopiekontrollbereich (207) nicht erstreckt; und
einen äußeren Bereich, der den zentralen Bereich umgibt und den Myopiekontrollbereich (207) umfasst.

8. Ophthalmische Linse (200) nach Anspruch 7, wobei:
die Linse (200) einen Übergangsbereich aufweist;
der Übergangsbereich den zentralen Bereich umgibt und der äußere Bereich den Übergangsbereich umgibt; und
der Übergangsbereich variiert, um einen gleichmäßigen Übergang zwischen dem zentralen Bereich und dem äußeren Bereich zu schaffen.

9. Ophthalmische Linse (200) nach Anspruch 1, wobei:
der Myopiekontrollbereich (207) durch die erste Oberflächen-Brechwertverteilung bereitgestellt wird;
die zweite Oberflächen-Brechwertverteilung einen weiteren Myopiekontrollbereich (207) umfasst, der eine Spiralform aufweist und Licht auf eine weitere Vielzahl von Brennpunkten (211) fokussiert, die von der ersten optischen Achse (201) versetzt sind;
die durch den weiteren Myopiekontrollbereich (207) gebildete Spirale sich in die entgegengesetzte Richtung zu derjenigen dreht, die durch den Myopiekontrollbereich (207) gebildet wird.

10. Ophthalmische Linse (200) nach Anspruch 1, wobei der Myopiekontrollbereich (207) einen Krümmungs-Additionswert bereitstellt, der größer als die Basisstärke ist.

11. Verfahren (500) zur Herstellung einer ophthalmischen Linse, wobei das Verfahren umfasst:
Bedienen einer Drehvorrichtung (530), um eine erste Oberfläche von mindestens: einer Linse, einer Form für eine Linse oder eines Einsatzes zur Herstellung einer Form für eine Linse zu formen;
Bedienen einer Drehvorrichtung (550), um eine zweite Oberfläche der Linse, der Form oder des Einsatzes zum Formen einer zweiten Oberflächen-Brechwertverteilung zu formen;
wobei:
die Kombination der ersten und zweiten Oberflächen-Brechwertverteilung eine Linsen-Brechwertverteilung mit einer ersten optischen Achse (201) bildet; und
einer der ersten Oberflächen-Brechwertverteilung, der zweiten Oberflächen-Brechwertverteilung und der Linsen-Brechwertverteilung Folgendes umfasst:
einen Basisbereich (205) mit einer Basisstärke, der das Licht auf einen Brennpunkt (209) fokussiert, der auf der ersten optischen Achse (201) liegt; und
einen Myopiekontrollbereich (207), der eine Spiralform umfasst und Licht auf eine Vielzahl von Brennpunkten (211) fokussiert, die von der ersten optischen Achse (201) versetzt sind, wobei
die Vielzahl der Brennpunkte (211) einen Ring oder einen unterbrochenen Ring bildet.

12. Verfahren nach Anspruch 11, ferner umfassend:
Designen der ophtalmischen Linse (510) durch:
Definieren (511) einer Krümmungsstärkenverteilung entlang des Meridians für einen ersten Meridian der ersten Oberfläche, der zweiten Oberfläche und der Linse;
Definieren (513) einer zweiten Krümmungsstärkenverteilung entlang des Meridians für einen zweiten Meridian, der an den ersten Meridian von einer der ersten Oberfläche, der zweiten Oberfläche und der Linse angrenzt;
wobei die zweite Krümmungsstärkenverteilung im Wesentlichen identisch mit den benachbarten radialen Bändern der Vielzahl ist, außer, dass sie radial zur optischen Achse (201) hin oder von ihr weg verschoben wurde.

## Revendications

1. Lentille ophtalmique (200) destinée à être utilisée pour prévenir ou ralentir le développement ou la progression de la myopie, dans laquelle :
la lentille (200) a un premier axe optique (201) ;
une première surface de la lentille (200) est façonnée pour former une première carte de puissance de surface ;
une seconde surface de la lentille (200) est façonnée pour former une seconde carte de puissance de surface ;
les première et seconde cartes de puissance de surface forment conjointement une carte de puissance de lentille ; et
une parmi la première carte de puissance de surface, la seconde carte de puissance de surface et la carte de puissance de lentille comprend :
une région de base (205) ayant une puissance de base qui focalise une lumière vers un point focal (209) qui est sur le premier axe optique (201) ; et
une région de contrôle de myopie (207) qui comprend une forme en spirale et focalise une lumière vers une pluralité de points focaux (211) qui sont décalés par rapport au premier axe optique (201),
dans laquelle la pluralité de points focaux (211) forment un anneau ou un anneau interrompu.

2. . Lentille ophtalmique (200) selon la revendication 1, dans laquelle :
La une parmi la première carte de puissance de surface, la seconde carte de puissance de surface et la carte de puissance de lentille comprend une carte de puissance de courbure ; et
la spirale est formée de telle sorte qu'une carte de puissance le long d'un méridien subit un déplacement progressif radialement vers ou à l'opposé de l'axe optique (201) à mesure que l'angle du méridien augmente.

3. Lentille ophtalmique (200) selon la revendication 2, dans laquelle :
la une parmi la première carte de puissance de surface, la seconde carte de puissance de surface et la carte de puissance de lentille comprend une pluralité théorique de bandes radiales s'étendant vers l'extérieur de l'axe optique (201) ; et
la carte de puissance de courbure de chaque bande radiale théorique dans la pluralité est sensiblement identique aux bandes radiales adjacentes dans la pluralité, hormis le fait qu'elles ont été déplacées radialement vers ou à l'opposé de l'axe optique (201).

4. . Lentille ophtalmique (200) selon la revendication 2, dans laquelle le déplacement radial de la carte de puissance le long d'un méridien de la une parmi la première carte de puissance de surface, la seconde carte de puissance de surface et la carte de puissance de lentille comprend un déplacement continu lisse.

5. . Lentille ophtalmique (200) selon la revendication 1, dans laquelle le décalage par rapport à l'axe optique (201) des points focaux (211) de la région de contrôle de myopie (207) est sensiblement constant sur toute la lentille (200).

6. . Lentille ophtalmique (200) selon la revendication 1, dans laquelle la une parmi la première carte de puissance de surface, la seconde carte de puissance de surface, et la carte de puissance de lentille comprend en outre une région de mélange ;
la région de mélange sépare la région de base (205) de la région de contrôle de myopie (207) ; et
la région de mélange varie pour assurer une transition lisse entre la région de base (205) et la région de contrôle de myopie (207).

7. . Lentille ophtalmique (200) selon la revendication 1, dans laquelle la région de base (205) entoure immédiatement l'axe optique (201), de telle sorte que la lentille (200) comprend :
une portion centrale dans laquelle la région de contrôle de myopie (207) ne s'étend pas ; et
une portion externe qui entoure la portion centrale et comprend la région de contrôle de myopie (207).

8. . Lentille ophtalmique (200) selon la revendication 7, dans laquelle :
la lentille (200) comprend une portion de transition ;
la portion de transition entoure la portion centrale et la portion externe entoure la portion de transition ; et
la portion de transition varie pour assurer une transition lisse entre la portion centrale et la portion externe.

9. . Lentille ophtalmique (200) selon la revendication 1, dans laquelle :
la région de contrôle de myopie (207) est fournie par la première carte de puissance de surface ;
la seconde carte de puissance de surface comprend une autre région de contrôle de myopie (207) qui comprend une forme de spirale et focalise une lumière vers une autre pluralité de points focaux (211) qui sont décalés par rapport au premier axe optique (201) ;
la spirale formée par l'autre région de contrôle de myopie (207) se tord dans la direction opposée à celle formée par la région de contrôle de myopie (207).

10. . Lentille ophtalmique (200) selon la revendication 1, dans laquelle la région de contrôle de myopie (207) fournit une puissance d'addition de courbure qui est supérieure à la puissance de base.

11. . Procédé (500) de fabrication d'une lentille ophtalmique, le procédé comprenant :
l'exploitation d'un tour (530) pour façonner une première surface d'au moins un parmi : une lentille, un moule pour une lentille, ou un insert pour la fabrication d'un moule pour une lentille ;
l'exploitation d'un tour (550) pour façonner une seconde surface de la lentille, du moule ou de l'insert afin de former une seconde carte de puissance de surface ;
dans lequel :
la combinaison des première et seconde cartes de puissance de surface forme une carte de puissance de lentille ayant un premier axe optique (201) ; et
une parmi la première carte de puissance de surface, la seconde carte de puissance de surface et la carte de puissance de lentille comprend :
une région de base (205) ayant une puissance de base qui focalise une lumière vers un point focal (209) qui est sur le premier axe optique (201) ; et
une région de contrôle de myopie (207) qui comprend une forme en spirale et focalise une lumière vers une pluralité de points focaux (211) qui sont décalés par rapport au premier axe optique (201), dans lequel la pluralité de points focaux (211) forment un anneau ou un anneau interrompu.

12. . Procédé selon la revendication 11, comprenant en outre :
la conception de la lentille ophtalmique (510) en :
définissant (511) pour un premier méridien de la une parmi la première surface, la seconde surface et la lentille, une distribution de puissance de courbure le long du méridien ;
définissant (513) pour un second méridien, adjacent au premier méridien, de la une parmi la première surface, la seconde surface et la lentille, une seconde distribution de puissance de courbure le long du méridien ;
dans lequel la seconde distribution de puissance de courbure est sensiblement identique aux bandes radiales adjacentes dans la pluralité, hormis le fait d'avoir été déplacée radialement vers ou à l'opposé de l'axe optique (201).
